# EUROPEAN PATENT SPECIFICATION

(11) **EP 2 308 712 B1**
(45) Date of publication and mention of the grant of the patent: **30.11.2016**
(21) Application number: 09012617.8
(22) Date of filing: 06.10.2009
(51) Int. Cl.: B60K 35/00, G06T 7/00, G06T 13/00

(54) **Method of displaying information about an operating state of a vehicle, in particular a rail vehicle, respective arrangement and rail vehicle comprising such an arrangement**
Verfahren zum Anzeigen von Informationen zu einem Betriebszustand eines Fahrzeugs, insbesondere eines Schienenfahrzeugs, entsprechende Einrichtung und Schienenfahrzeug mit einer derartigen Einrichtung
Informations d'affichage associées à l'état de fonctionnement d'un véhicule, en particulier un véhicule ferroviaire, arrangement respectif et véhicule ferroviaire avec un tel arrangement

(43) Date of publication of application: 13.04.2011
(73) Proprietor: Bombardier Transportation GmbH, 10785 Berlin (DE)
(72) Inventor: Conan, Loïc, 59130 Lambersart (FR); De Coen, Luc, 9230 Wetteren (BE)
(74) Representative: Brunotte, Joachim Wilhelm Eberhard

(56) References cited:
- EP-A2- 0 396 071
- EP-B1- 1 074 003
- DE-A1- 19 755 470
- DE-C1- 19 940 718
- US-A- 5 864 432
- US-A1- 2003 151 614
- US-B1- 7 212 175

## Description

The invention relates to a method of checking if information about an operating state of a vehicle, in particular a rail vehicle, to be displayed on a display is correct, wherein the display is adapted to display pictures comprising pixels. The invention further relates to an arrangement for displaying information about an operating state of a vehicle, in particular a rail vehicle. The information is to be displayed in a pre-determined region of the display, wherein the pre-determined region may be a part of the display area or the whole display area. In order to check that the information to be displayed is displayed correctly, a characteristic value of the information to be displayed is calculated and is compared with an expected value In particular, there is an expected value for each possible information to be displayed. The arrangement comprises a corresponding calculation device adapted to calculate the characteristic value of the information to be displayed and further comprises a corresponding comparison device adapted to compare the characteristic value with the expected value. A first type of the information and a second type of the information are to be displayed in the pre-determined region. For example, the first type of the information may be the vehicle speed as measured by a measurement system. The second type of the information may be for example the speed region which is allowed.

It is well-known to use displays, for example LCD (liquid crystal displays) or TFT (thin film transistor) displays, in the control desk of a rail vehicle in order to display information for the driver. The display or displays may be part of a so-called human machine interface (HMI) which may also comprise so-called soft keys which can be touched by the driver for control purposes.

The display or the HMI is usually controlled by at least one micro processor and the information to be displayed on the display is used to generate a data set which comprises the data necessary for producing a corresponding picture on the display.

Even when the transfer of the information to the display or HMI is safe, i.e. an error is very unlikely, generating the data set, storing the data set and using the data set in order to produce the corresponding picture on the display may produce failures. As a result, for example, the wrong speed value of the vehicle may be displayed.

Therefore, it has been proposed earlier to calculate a characteristic value from the data of the data set or from a part of the data set which corresponds to the pre-determined region where the information is to be displayed. The pre-determined region may be a part of the display area where the speed is to be displayed and, in addition, a second information concerning the speed is to be displayed.

DE 199 40 718 C1 describes a method for displaying traffic information. A perspective image is displayed comprising an image element for at least one occupant of the vehicle. The image element is changed with respect to at least one quantity depending on at least one operating parameter of the vehicle. As quantity of the image element, the colour of the image element can be changed. However, the document does not discuss or provide a solution for the problem how to make sure that a multi-colour display content is correctly displayed in view of different types of information about an operating state of a vehicle.

In particular, in the control desk of a vehicle, such as a rail vehicle, safety relevant information is to be displayed. One example is the speed, as mentioned above, and another example may be the degree of availability of the braking system. In the same pre-determined region as the availability value, a command value representing the braking force requested by the driver may be displayed. There are other examples for pre-determined regions on displays of rail vehicle where at least two types of information are to be displayed.

Calculating the characteristic value of the region and comparing the value with an expected value reduces the likelihood that a failure is not detected to nearly 0. The so-called CRC value (cyclic redundancy check value) is one example of a characteristic value to be compared with an expected value. However, the only requirement for the characteristic value is that it can unambiguously be calculated and that the result of the calculation is reproducible. The resulting unique value represents the information which is displayed in the corresponding region.

The data set which corresponds to the picture to be displayed is used, as mentioned above, to calculate the characteristic value. In particular, the data set can be read out from a display memory, i.e. a data storage of the display. However, it is also possible to use a display signal which corresponds to the data set and which is used to transfer the picture to the display for calculating the characteristic value. The display signal which may also be called video signal may be transferred to the display via a data bus.

The characteristic value may repeatedly be calculated to ensure that the correct characteristic value which corresponds to the picture which is actually displayed is used for the comparison with the expected value.

For obtaining the expected value, the information to be displayed may be used. For example, this information is transferred to the display or HMI and it is used to select the corresponding stored comparison value from a data storage comprising several comparison values. For example, the speed value may be in the range from 0 to 200 km/h. Furthermore, only integer numbers may be valid speed values. Therefore, 201 different speed values are possible and 201 corresponding comparison values are stored for comparison with the characteristic value.

Calculating the characteristic value for a single type of information to be displayed in the predetermined region is straight forward. However, if two types of information are displayed within the same pre-determined region, many comparison values must be prepared and stored. For example, the speed may be displayed using a pointer and, within the same region of the display, as a number The pointer and the number may be produced using two different measurement signals and/or two different ways of transferring the speed value to the display or HMI. Generally, it would be expected that the pointer and the number correspond to the same speed value. However, since the different measurement sensors and/or procedures may produce different results, some deviations are acceptable. Therefore a large number of combinations of comparison values is needed to compare the actual display content with acceptable expected results. If all possible combinations of integer values between 0 and 200 km/h should be detected, e.g. for more detailed error analysis, 201 times to 201 comparison values need to be prepared and stored, although some of the combinations may be very unlikely to occur. The effort for producing the large number of comparison value combinations is very high. In addition, high storage capacity is needed and when the desired comparison value is retrieved corresponding resources in terms of hardware and software are required.

US 7,212,175 B1 describes an information processing system. The information processing system includes a first processor that receives input data and creates a pixel data stream provided over a first channel and a second channel. The first channel provides a signal to affect the output of a pixelated display. The second channel includes location information and symbol information. The information processing system also includes a second processor coupled to the first processor. The second processor receives the location information and the symbol information from the first processor. The second processor receives the input data. The second processor computes a derived version of the inputs based on the location information and the symbol information. Thereby, integrity of information to be displayed based on input data from a plurality of aircraft sensors and/or systems can be verified.

It is an object of the present invention to propose a method and an arrangement of the type as mentioned above, wherein the effort for preparing the comparison values is reduced and identifying the correct comparison value is facilitated.

The attached patent claims define the scope of protection.

It is proposed to use different colours for displaying the first type of information and the second type of information within the same pre-determined region of the display. For example, a pointer for indicating the speed may be displayed. In red and the region of allowed speed values may be displayed in yellow as a circular line segment. However, it is also possible that the colours for displaying the two types of information are nearly identical so that the driver cannot recognise a difference between the two colours. Despite that, in the data set defining the picture to be displayed which contains the two types of information, the colour values (which may be hexadecimal values) are different.

Furthermore, it is proposed to modify the data set or a corresponding video signal by changing the colour of the first type of information (e.g, red) to a third colour. With this first modified data set, a second characteristic value of the pre-determined region is calculated and compared with a corresponding second comparison value. It is an advantage that this comparison value only refers to the second type of information. For example, there may be 10 or 20 possible speed ranges which define the allowed speed (the second type of information). Correspondingly, 10 or 20 comparison values are stored. According to a different example, the second type of information maybe a measurement value of the same kind as the first type of information which is obtained by a different measurement (e.g. see example above for two different speed measurements).

Furthermore, the data set is again modified, but this time by changing the colour of the second type of information. A second modified data set is obtained, a first characteristic value is calculated and is compared with a first comparison value. This first comparison value only relates to the first type of information. For example, the first type of information may be the speed and only 201 speed values may be allowed.

Since the comparison values are calculated and compared separately, resources in terms of hardware and software can be saved. Less storage capacity is needed to store the comparison values.

Preferably, there is a pre-determined background colour of the display. For example, the background colour may be black. At least some sub-regions within the pre-determined region of the display which are not used to display the first type of information or the second type of information may be shown in the background colour by changing the colour of the first type of information to the background colour. Thereby, the information about the first type of information is erased so that it does not influence the calculation of the second characteristic value.

However, it is not always necessary to change the colour of the first type of information and/or the colour of the second type of information to the background colour in order to produce the corresponding modified data set. Depending on the way the information is displayed in the pre-determined region, the colour can be changed to another colour. The only requirement is that the type of information, the colour of which is changed, is always eliminated, i.e. corresponding modified data sets do not contain this type of information anymore.

For example, as mentioned above, the speed region may be displayed as a segment of a circular line. The segment corresponds to an angle around the centre of the circular line. In addition, the picture may comprise further segments of the same circular line and, for example, all segments may be located in a pre-determined region of the circular line. These other segments may be displayed in a fourth colour, e.g. white. The segment representing the second type of information may be displayed in yellow. The corresponding angle and angular position of the segment representing the type of information may vary according to the value or values of the second type of information.

However, this segment and the other segments are consecutive segments within the pre-determined region of the circular line and this region of the circular line is always visible to the user as a chain of segments having the second colour (e.g. yellow) and the fourth colour (e.g. white). A specific example of this kind is illustrated in the attached figures and will be described later. In other words: The pre-determined angular region of the circular line, for example 90 degrees, is always visible and -depending on the second type of information - a part of the angular region is displayed in the second colour and the rest is displayed in the fourth colour. By changing the second colour to the fourth colour, in order to produce the second modified data set, the second type of information is eliminated. Since the result is always the same (a segment of the circular line having the fourth colour), the second type of information has no influence on the characteristic value, which is the first characteristic value which is used to be compared with the first comparison value.

Therefore, more generally speaking, the colour of the respective type of information (the first type of information or the second type of information) is changed to a pre-determined colour so that the respective type of information is eliminated.

Preferably, none of the areas on the display is used for displaying different types of information at the same time, i.e. the areas used to display the different types of information do not overlap. In case they overlap, special care must be taken to fully remove the corresponding information in order to calculate the corresponding characteristic value.

The present invention is not restricted to displaying two types of information within the same pre-determined region. Rather, for example three types of information may be displayed within the pre-determined region. In this case, three modified data sets are produced by changing the colours in such a manner that in each case two other types of information are eliminated. The remaining type of information is the one for which the corresponding characteristic value is then calculated from the modified data set and is compared with the corresponding comparison value. More generally speaking, n modified data sets are produced by changing the colours within the predetermined region in such a manner that in each case all other types of information are eliminated and the remaining type of information is the one for which the corresponding characteristic value is then calculated from the modified data set and is compared with the corresponding comparison value. n is the number of different types of information.

When comparing the comparison value (which can also be called the expected value) with the corresponding characteristic value, there are two possible results. First, the comparison may be successful, i.e. there is no significant difference. Second, there is a significant difference. In this case, there is a pre-determined action to take. In particular, the operation of the display may be changed to a fall back operation in which some information may still be displayed to the user, but it is clearly indicated that the displayed information is not safe. Further actions may be taken, such as the output of instructions to the user or driver to reduce the speed and to initiate repair as soon as possible.

In particular, the following is proposed: A method of displaying information about an operating state of a vehicle, in particular a rail vehicle, on a display which is adapted to display pictures comprising pixels, wherein
- the information is displayed in a predetermined region of the display,
- the information comprises a first type of information and a second type of information which are displayed in the predetermined region,
- the first type of information is displayed using pixels of a first predetermined colour and the second type of information is displayed using pixels of a second predetermined colour, wherein the first and second colours differ,
   a first characteristic value of the information is calculated and a second characteristic value of the information is calculated,
- before calculating the second characteristic value, a picture data set corresponding to the picture to be displayed in the predetermined region is modified by changing the pixels of the first predetermined colour to a third predetermined colour, which differs from the first colour, and optionally changing other colours, thereby obtaining a first modified data set,
- before calculating the first characteristic value, the picture data set corresponding to the picture to be displayed in the predetermined region is modified by changing the pixels of the second predetermined colour to a fourth predetermined colour, which differs from the second colour, and optionally changing other colours, thereby obtaining a second modified data set,
- the first characteristic value is calculated from the second modified data set.
- the second characteristic value is calculated from the first modified data set,
- the first characteristic value is compared with a first expected value,
- the second characteristic value is compared with a second expected value.

The third and fourth colour may be identical or not. In particular, the first modified data set does not contain the first type of information and the second modified data set does not contain the second type of information.

As mentioned above, there may be a third type of information. In this case, a first type of the information, a second type of the information and a third type of the information are displayed in the pre-determined region, wherein
- the third type of information is displayed using pixels of a fifth predetermined colour, wherein the first, second and fifth colours differ,
- a third characteristic value of the third type of information is calculated,
- before calculating the second characteristic value, a picture data set corresponding to the picture to be displayed in the predetermined region is modified by changing the pixels of the first predetermined colour to the third predetermined colour and by changing the pixels of the fifth predetermined colour to a sixth predetermined colour, and optionally changing other colours, thereby obtaining the first modified data set,
- before calculating the first characteristic value, the picture data set corresponding to the picture to be displayed in the predetermined region is modified by changing the pixels of the second predetermined colour to the fourth predetermined colour and by changing the pixels of the fifth predetermined colour to a seventh predetermined colour, and optionally changing other colours, thereby obtaining the second modified data set,
- before calculating the third characteristic value, a picture data set corresponding to the picture to be displayed in the predetermined region is modified by changing the pixels of the first predetermined colour to an eighth predetermined colour and by changing the pixels of the second predetermined colour to a ninth predetermined colour, and optionally changing other colours, thereby obtaining a third modified data set,
- the first characteristic value Is calculated from the second modified data set,
- the second characteristic value is calculated from the first modified data set,
- the third characteristic value is calculated from the third modified data set,
- the first characteristic value is compared with a first expected value,
- the second characteristic value is compared with a second expected value,
- the third characteristic value is compared with a third expected value.

The colour, which the colour of the type of information is changed to, may be the same colour for all changes, or, alternatively, at least some of these colours may differ. However, the easiest way would be, to change all colours to be changed to the background colour of the display. Care must be taken that other colours which are indirectly used to display the respective type of information (see above the example of segments of a circular line) are also changed to the background colour, in this case.

Furthermore an arrangement for displaying information about an operating state of a vehicle, in particular a rail vehicle, is proposed comprising
- a display which is adapted to display pictures comprising pixels,
- the display comprising a predetermined region in which the information is to be displayed,
- a calculation device adapted to calculate a characteristic value of the displayed information,
- a comparison device adapted to compare the characteristic value with an expected value,
   wherein the arrangement is adapted to display a first type of the information and a second type of the information in the predetermined region and wherein
- the first type of information is displayed using pixels of a first predetermined colour and the second type of information is displayed using pixels of a second predetermined colour, wherein the first and second colours differ,
- the calculation device is adapted to calculate a first characteristic value of the actually displayed information of the first type and to calculate a second characteristic value of the actually displayed information of the second type,
- the arrangement comprises a modification device adapted to modify, before the second characteristic value is calculated, a picture data set corresponding to the picture to be displayed in the predetermined region by changing the pixels of the first predetermined colour to a third predetermined colour, which differs from the first colour, and optionally changing other colours, thereby obtaining a first modified data set,
- the modification device is adapted to modify, before the first characteristic value is calculated, the picture data set corresponding to the picture to be displayed in the predetermined region by changing the pixels of the second predetermined colour to a fourth predetermined colour, which differs from the second colour, and optionally changing other colours, thereby obtaining a second modified data set,
- the calculation device is adapted to calculate the first characteristic value from the second modified data set,
- the calculation device is adapted to calculate the second characteristic value from the first modified data set,
- the comparison device is adapted to compare the first characteristic value with a first expected value,
- the comparison device is adapted to compare the second characteristic value with a second expected value.

Embodiments and examples of the arrangement follow from the description of the method of the present invention.

Furthermore, the invention comprises a rail vehicle, comprising the arrangement for displaying information about an operating state of the vehicle, wherein the display of the arrangement is arranged in a control desk for a driver of the vehicle. wherein the vehicle is preferably a rail vehicle.

Examples and preferred embodiments of the invention are described with reference to the attached figures. The figures show:
- Fig. 1: an example of a control and display system in the control desk of a rail vehicle,
- Fig. 2: parts of an HMI comprising display areas and input means which are visible to the driver,
- Fig. 3: a display system comprising a central computer and a display device,
- Fig. 4: a block diagram illustrating a preferred embodiment of the method of displaying information about an operating state of a vehicle,
- Fig. 5a-c: a second example of a display area showing two different types of information and
- Fig. 6: a schematic diagram showing devices and units of an arrangement for measuring and displaying speed values.

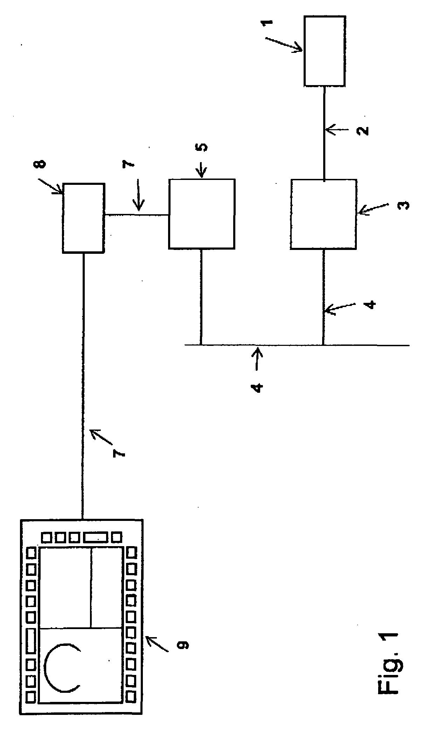

Fig. 1 shows an example of an arrangement in a rail vehicle. A signal source 1 is connected to a first computer 3 via a data transfer line 2. The signal source 1 is, for example, a speed sensor or a device for calculating a speed value from the measurement value of a speed sensor.

The first computer 3 is connected to a data bus 4, for example a multi-functional vehicle bus (MVB) of the rail vehicle. A second computer 5 is connected to the data bus 4. The first computer transfers the measurement values continuously to the second computer via the data bus 4.

The second computer 5 is connected to the display device 9 via a further data transfer line 7, which may be an Ethernet data bus. A switch 8 may be part of the data transfer line 7, for routing the data to be transferred. The speed values which are received by the second computer 5 are transferred to the display device 9 via the data transfer line 7.

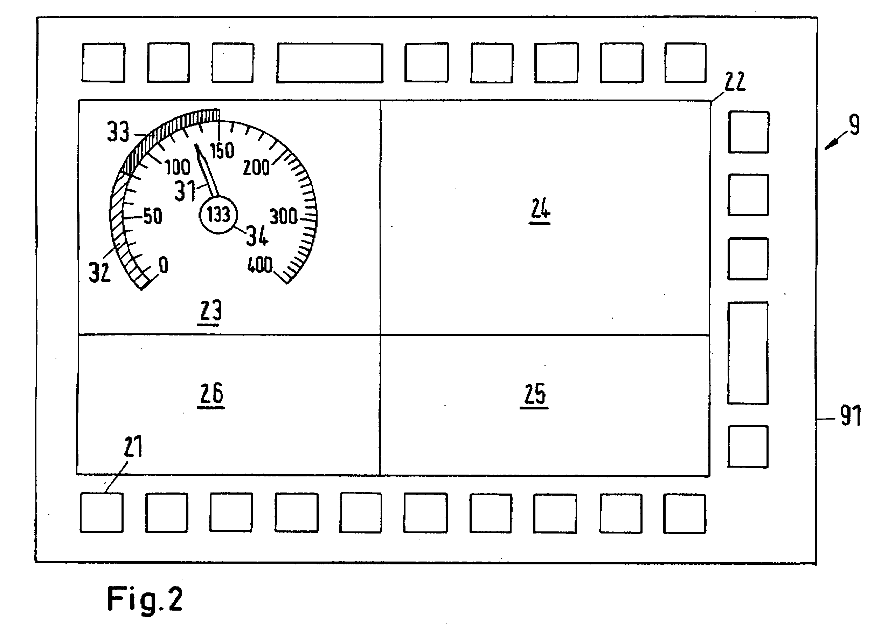

In Fig. 2, the rectangular frame 91 denotes the outline of the display device 9. Within the inner rectangular frame 22, information can be displayed to the vehicle driver. For example, this display area 22 may be a LCD display, a OLED (organic light emitting diode) display or a TFT display.

The display area 22 is divided into four regions 23, 24, 25 and 26. In the region 23, the speed of the vehicle is displayed. Region 24 may display monitoring information for monitoring the state of technical devices of the vehicle, region 25 may display supplementary driving information to the driver and region 26 may display responses of the vehicle control system to input made by the driver.

Within the outline 91 of the display device 9, but outside of the display area 22, rectangular blocks are shown, one of which is denoted by reference numeral 21. These areas may be touched by the driver and corresponding input signals or Input data Is produced. For example, the ten quadratic areas under the display area 22 may correspond to the numerals 0 to 9. Other touch sensitive areas may correspond to specific functions, such as increase or decrease illumination intensity of the display or display background.

Within pre-determined region 23, three different types of speed related information is displayed. First, the speed in km/h is indicated as a number (here "133") within a circular line in the centre of display region 23. Second, a pointer 31 or "needle" is displayed which points to the value "133" on the circular scale having the range from "0" to "400". Third, a circular line or bar is extending from "0" of the scale to "150" of the scale. The colour of the bar changes at the value "80" of the scale. The bar segment from "0" to "80" is denoted by 32 and the bar segment from "80" to "150" is denoted by 33. The region from "80" to "150" indicates to the driver that the speed should be in this speed region, i.e. should be not smaller than 80 km/h and should be not greater than 150 km/h.

The number "133" which is shown in the central circle 34 is displayed in a first colour, for example white. The pointer 31 is displayed in a second colour, for example orange. The second bar segment 33 is displayed in a third colour, for example red.

The number "133" which is displayed in region 23 is preferably based on a first measurement value which is transferred to the display device 9. The angular position of the pointer 31 around the centre of circle 34 is preferably the result of a second measurement value of the speed which is received by the display device 9 and which is not necessarily in all cases identical to the first measurement value, for example because different measurement sensors and/or different ways of transferring the same measurement value to the display device 9 is/are used. However, some tolerances between the displayed number and the corresponding angular position of the pointer may be acceptable, for example a speed difference of 1 km/h may be acceptable. Provided, that there are discrete angular positions of the pointer corresponding to integer values of the speed and provided that only integer values of the speed are displayed within circle 34, there are three combinations of comparison values for these two types of information which correspond to acceptable display content. In addition, the third type of information, which is represented by the bar segments has different possible visualisations. As a result, there are many possible combinations of comparison values.

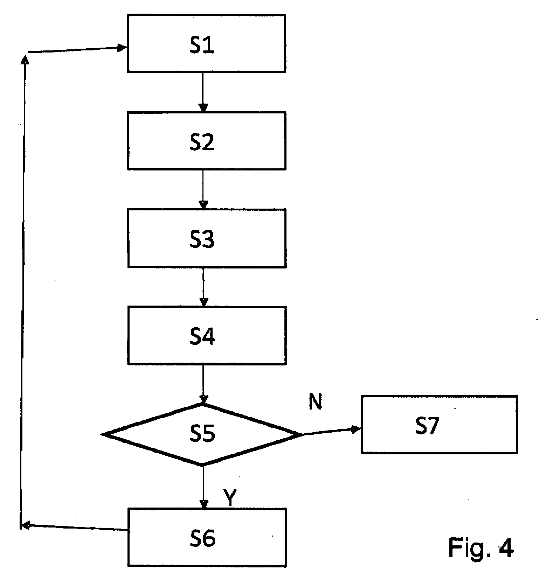

A preferred way of operating the display device 9 in order to ensure that the correct information is actually displayed in region 23, will be described with reference to Fig. 4

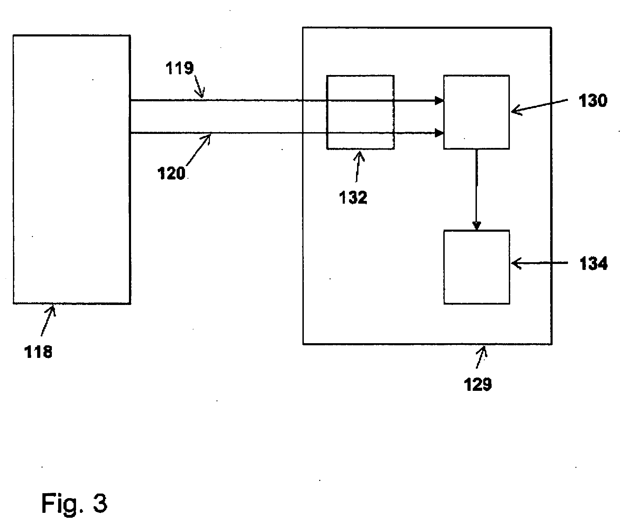

Fig. 3 shows a computer 118 which may be, for example computer 3 of Fig. 1. The transfer of two different signals, corresponding to two different measurement values, is indicated by arrows 119, 120. The arrows end at the display device 129, or more particularly speaking, at a data processor 130 of device 129. The arrows 119, 120 pass block 132 which represents a receiving unit for receiving the signals via a signal transfer line, for example line 7 of Fig. 1. A safety procedure for safe transfer of the signals and corresponding measurement values may be implemented and, for example, receiving device 132 may therefore calculate check sums. As a result, the measurement values which are transferred by the two signals are safely received by the display device 129 and can be displayed. For example, the measurement values are stored in a data storage 134 of the display device 129. As soon as updated values of the measurement values are received, the corresponding stored values are updated. Using devices which are not shown in Fig. 3, the display device 129 repeatedly reads out the measurement values from the data storage 134 and produces corresponding pictures to be displayed, wherein the pictures make the measurement values visible to the user or spectator of the display. While producing the pictures, a first one of the measurement values may be used to calculate a corresponding angle of a pointer which is part of the picture. The second measurement value may be displayed at a number. Examples have been described with reference to Fig. 2.

The picture may be produced as follows. A corresponding picture data set may be calculated, wherein the two-dimensional picture corresponds to a two-dimensional data set, i.e. the position of each pixel in the data set or the corresponding picture is unambiguously described by two coordinates.

First, the background colour may be set by assigning corresponding colour values to every pixel of the data set. In a second step, objects like the circular scale of display region 23 of Fig. 2 may be assigned by assigning a corresponding colour value to the pixels having the corresponding co-ordinates. In a third step, the first type of information to be displayed may be calculated and corresponding pixels in the picture data set may be assigned the first colour which is used to display the first type of information. In a following step, the second type of information may be calculated and the corresponding pixels may be assigned the second colour which is used to display the second type of information. The procedure may continue in the same manner until all types of information are contained in the picture, i.e. in the form of the picture data set.

Fig. 4 illustrate a step by step procedure for changing a data picture set in order to calculate different characteristic values corresponding to the different types of information contained in the picture data set. In step S1, the pre-determined region where the different types of information are displayed within the picture is identified and extracted from the picture data set. Only the pixels within the pre-determined region will be used to calculate the characteristic value.

In the following step S2, a copy of the extracted picture data set is stored. In the following step S3, the colour of the first type of information is changed, i.e. the corresponding pixels having the first colour are assigned a new colour, preferably the background colour. Furthermore, the characteristic value is then calculated using the modified picture data set. Since the first type of information has been eliminated, the characteristic value represents the information of the second type.

In the following step S4, the stored extracted picture data set which still contains the first and second type of information, is again modified, but this time by assigning the pixels having the second colour which is used to display the second type of information, a new colour, which is preferably the background colour. Furthermore, the corresponding characteristic value is calculated from this modified picture data set. The resulting characteristic value represents the first type of information.

If there are more than two types of information, one or more corresponding additional step(s) (not shown) is/are performed in order to produce a corresponding modified picture data set and to calculate a corresponding characteristic value, for each type of information.

In following step S5, the first and second characteristic value (and optionally each further characteristic value for any additional type of information) is compared with a corresponding expected value. If at least one of the comparisons discovers significant differences between the characteristic value and the expected value, the procedure continuous with step S7. The arrow between step S5 and step S7 is marked with "N" which means that the comparison was not successful. In step S7, the display device is operated in a so-called safe mode. In particular, only one type of information may be displayed within the predetermined region and, in addition, a warning to the driver that the operation takes place may be displayed as well. Other than shown in Fig. 4, step S7 may be followed by step S1 if the reason for the non-successful comparison no longer exists.

If the comparison was successful (the corresponding arrow in Fig. 4 is marked with "Y", the operation continues with step S6, which is an optional step of resetting the procedure or calculating the characteristic values, in particular by deleting the picture values of the extracted picture data set Alternatively or in addition, step S6 may produce a watch dog signal, i.e. a signal which is expected to be produced regularly. If the watch dog signal is not produced within a time interval of pre-determined lengths after the last production of the watch dog signal, the safe mode operation of the display device is started.

After step S6, the procedure returns to step S1. Generally, not only with respect to the example described here, it is preferred that the method of the present invention is repeatedly performed, in particular periodically.

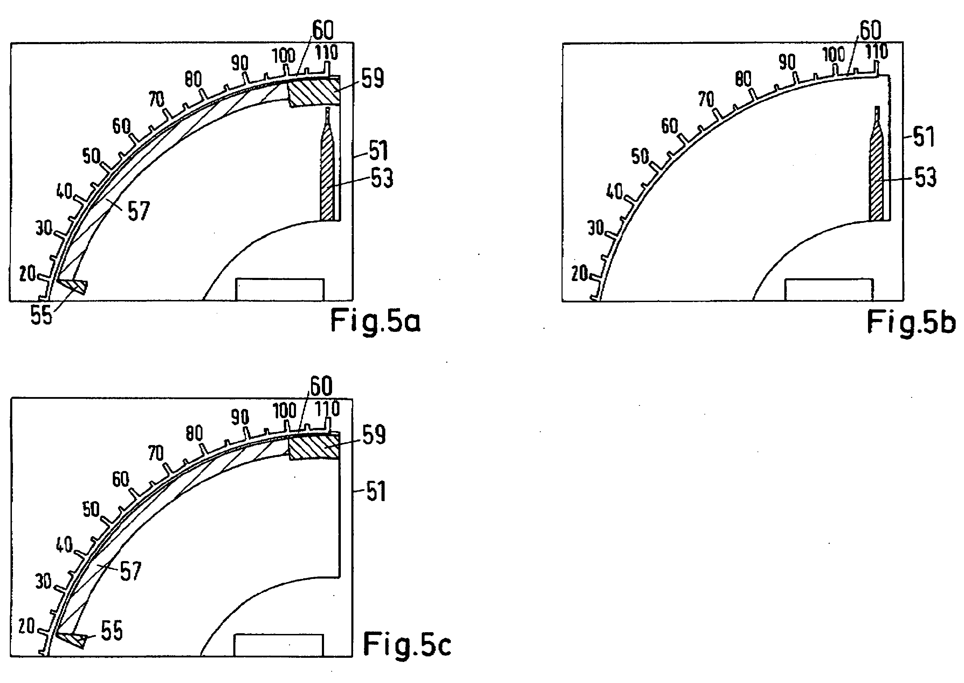

Fig. 5a shows a different example of displaying two different types of information within the same pre-determined region 51 of a display area. Similarly to Fig. 2, a pointer 53 indicates a value according to a first type of information. The second type of information is displayed using bar segments. The broader bar segment 59 is, for example, displayed in red. Close to the value 20 on scale 60, a wedge-like element is also displayed in red. In between the wedge-like element 55 and the broader bar segment 59, a thinner bar segment 57 is displayed, for example in yellow. The wedge-like segment 55, the thinner bar segment 57 and the broader bar segment 59 correspond to the second type of information. In other operational states, the second type of information may result in a different broader bar segment than segment 59 in Fig. 5a-c. For example this broader bar segment may extend from 115 to 80 on the scale 60. In addition, the wedge-like element 55 may be positioned at value 40 of scale 60 and therefore, the thinner bar segment may extend from the value 40 to the value 80.

In order to calculate the characteristic value of the first type of information, the colour of the wedge-like element 55, the colour of the broader bar segment 59, which are identical colours, as well as the colour of the thinner bar segment 57 are changed to the background colour thereby eliminating the second type of information (Fig. 5b). Then, the characteristic value of the first type of information can be calculated.

Fig. 5c shows the result of another modification of Fig. 5a. Here, the first type of information is eliminated by setting the colour of the pointer 53 to the background colour.

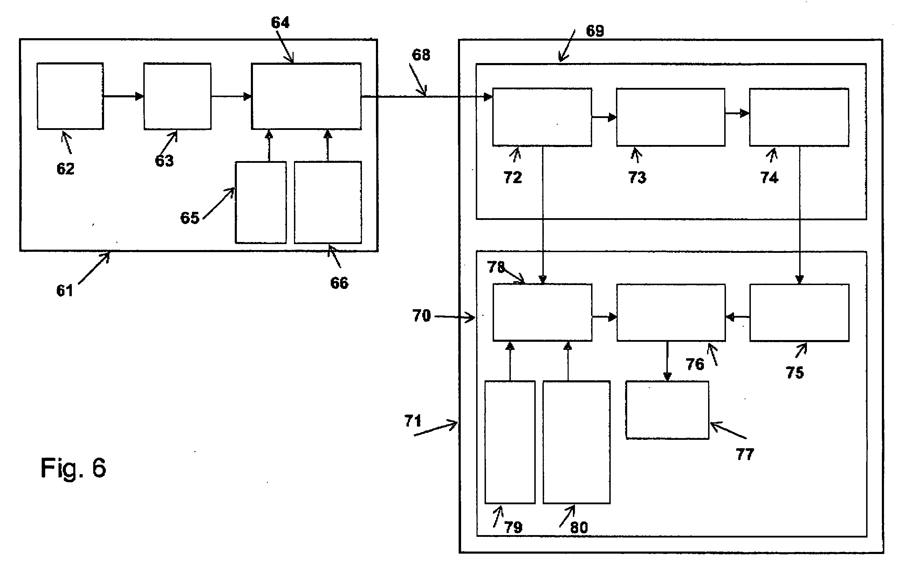

Fig. 6 shows an arrangement comprising devices for generating measurement values and the display device or HMI 71 of the present invention. In the following, several "functions" are mentioned. These functions may be realised by computer software and/or hardware, for example. Also "communication devices" are mentioned. At least some of the functions of the communication devices may also be realised by computer software and/or hardware.

Device 61 which may be a so-called driver control unit motor converter comprises a function 62 that continuously or repeatedly receives speed signals from at least one speed sensor. The speed signals are transferred to a signal processor function 63 which generates a corresponding speed value signal. Signal processor function 63 may also produce additional types of information, such as the possible speed ranges which define the allowed speed of the vehicle. The output (comprising at least one and preferably at least two types of information) of the signal processor function 63 is transferred to a communication device 64 for safe communication via transfer line 68 to a corresponding communication device 72 of HMI71. However, communication device 72 may receive additional types of information from other sources, not shown in Fig. 6. For example the possible speed ranges may not be produced by signal processor function 63, but by another processor which is not shown.

Blocks 65 and 66 represent functions which contribute to the safe signal transfer via line 68. The communication device 72 of HMI71 is part of a main processor 69. The speed signal which is received by the communication device 72 is transferred to a data processing function 73 which processes the speed signal in order to produce corresponding pictures to be displayed. Data processing function 73 may produce the picture data set as mentioned above. Display control function 74 is controlling the display according to the output of data processing function 73 to produce a picture which corresponds to the picture data set produced by data processing function 73.

HMI 71 also comprises a safety processor 70 which also receives the unmodified speed signal which is output from communication device 72 to data processing function 73. The receiving device of safety processor 70 is denoted by 78. Therefore, safety processor 70 receives the information to be displayed and can use this information in order to check the correct operation of the display of HMI 71. The received information may be, for example, the speed of the vehicle and/or other information. Blocks 79 and 80 represent functions which contribute to the safe signal transfer to safety processor 70.

Function 75 of safety processor 70 receives an output signal of display control function 74 in order to obtain information of the actual display content and/or to obtain data corresponding to the actually displayed picture. Therefore, the operation of data processing function 73 can be checked by safety processor 70. Using this information and/or data, the method of the present invention is performed by data processing function 76. Safety processor 70 can also check other functions of the main processor 69.

Data processor 76 may perform at least steps S2 to S6 of Fig. 4. It also generates the watch dog signal which is to be transferred to watch dog device 77 that initiates the safe operation of the HMI if the watch dog signal is not regularly received.

## Claims

1. A method of checking if information about an operating state of a vehicle, in particular a rail vehicle, to be displayed on a display is correct, wherein the display is adapted to display (9) pictures comprising pixels, wherein
- the information is to be displayed in a predetermined region (23) of the display (9),
- the information to be displayed on the display (9) is used or has been used to generate a picture data set which comprises the data necessary for producing a corresponding picture on the display (9),
- the information comprises a first type of information (31) and a second type of information (33) which are to be displayed in the predetermined region (23),
- the first type of information (31) is to be displayed using pixels of a first predetermined colour and the second type of information (33) is to be displayed using pixels of a second predetermined colour,
- a first characteristic value of the information is calculated and a second characteristic value of the information is calculated,
wherein
the first and second colours differ and the method comprises the steps of:
- modifying, before calculating the second characteristic value, the picture data set corresponding to the picture to be displayed in the predetermined region (23) by changing the pixels of the first predetermined colour to a third predetermined colour, which differs from the first colour, thereby eliminating the first type of information with respect to the calculation of the second characteristic value, and optionally changing other colours, thereby obtaining a first modified data set,
- modifying, before calculating the first characteristic value, the picture data set corresponding to the picture to be displayed in the predetermined region (23) by changing the pixels of the second predetermined colour to a fourth predetermined colour, which differs from the second colour, thereby eliminating the second type of information with respect to the calculation of the first characteristic value, and optionally changing other colours, thereby obtaining a second modified data set,
- calculating the first characteristic value from the second modified data set,
- calculating the second characteristic value from the first modified data set,
- selecting a first expected value, which corresponds to the first type of information (31) to be displayed, and comparing the first characteristic value with the first expected value,
- selecting a second expected value, which corresponds to the second type of information (33) to be displayed, and comparing the second characteristic value with the second expected value,
- if the comparison is non-successful, i.e. there is a significant difference between the respective expected value and the characteristic value, taking a corresponding pre-determined action.

2. The method of the preceding claim, wherein a first type of the information (31), a second type of the information (33) and a third type of the information (34) are to be displayed in the predetermined region (23) and wherein
- the third type of information (34) is to be displayed using pixels of a fifth predetermined colour, wherein the first, second and fifth colours differ,
- a third characteristic value of the third type of information is calculated,
- before calculating the second characteristic value, a picture data set corresponding to the picture to be displayed in the predetermined region (23) is modified by changing the pixels of the first predetermined colour to the third predetermined colour and by changing the pixels of the fifth predetermined colour to a sixth predetermined colour, and optionally changing other colours, thereby obtaining the first modified data set,
- before calculating the first characteristic value, the picture data set corresponding to the picture to be displayed in the predetermined region (23) is modified by changing the pixels of the second predetermined colour to the fourth predetermined colour and by changing the pixels of the fifth predetermined colour to a seventh predetermined colour, and optionally changing other colours, thereby obtaining the second modified data set,
- before calculating the third characteristic value, a picture data set corresponding to the picture to be displayed in the predetermined region (23) is modified by changing the pixels of the first predetermined colour to an eighth predetermined colour and by changing the pixels of the second predetermined colour to a ninth predetermined colour, and optionally changing other colours, thereby obtaining a third modified data set,
- the first characteristic value is calculated from the second modified data set,
- the second characteristic value is calculated from the first modified data set,
- the third characteristic value is calculated from the third modified data set,
- the first characteristic value is compared with a first expected value,
- the second characteristic value is compared with a second expected value,
- the third characteristic value is compared with a third expected value.

3. The method of one of the preceding claims, wherein, when changing a colour of a type of information to be displayed in order to obtain a corresponding modified data set, the colour of the type is changed to a colour which eliminates the information for the purpose of a calculation of a corresponding characteristic value.

4. The method of the preceding claim, wherein the colour, which the colour of the type of information is changed to, is a background colour of the display (9).

5. An arrangement for checking if information about an operating state of a vehicle, in particular a rail vehicle, to be displayed is correct, the arrangement comprising
- a display (9) which displays pictures comprising pixels,
- the display (9) comprising a predetermined region (23) in which the information is to be displayed,
- a calculation device calculating a characteristic value of the information to be displayed,
- a comparison device comparing the characteristic value with an expected value, wherein the arrangement is adapted to display a first type of the information and a second type of the information in the predetermined region (23),
wherein the first type of information (31) is to be displayed using pixels of a first predetermined colour and the second type of information (33) is to be displayed using pixels of a second predetermined colour,
wherein the calculation device calculates a first characteristic value of the first type of information and calculates a second characteristic value of the second type of information ,
wherein
- the first and second colours differ,
- the arrangement comprises a modification device modifying, before the second characteristic value is calculated, a picture data set corresponding to the picture to be displayed in the predetermined region (23) by changing the pixels of the first predetermined colour to a third predetermined colour, which differs from the first colour, thereby eliminating the first type of information with respect to the calculation of the second characteristic value, and optionally changing other colours, thereby obtaining a first modified data set,
- the modification device modifying, before the first characteristic value is calculated, the picture data set corresponding to the picture to be displayed in the predetermined region (23) by changing the pixels of the second predetermined colour to a fourth predetermined colour, which differs from the second colour, thereby eliminating the second type of information with respect to the calculation of the first characteristic value, and optionally changing other colours, thereby obtaining a second modified data set,
- the calculation device calculating the first characteristic value from the second modified data set,
- the calculation device calculating the second characteristic value from the first modified data set,
- the comparison device comparing the first characteristic value with a first expected value, which is a selected value that corresponds to the first type of information (31) to be displayed,
- the comparison device comparing the second characteristic value with a second expected value, which is a selected value that corresponds to the second type of information (33) to be displayed,
- the arrangement taking a corresponding pre-determined action if the comparison is non-successful, i.e. there is a significant difference between the respective expected value and the characteristic value.

6. A rail vehicle, comprising the arrangement of the preceding claim, wherein the display (9) of the arrangement is arranged in a control desk for a driver of the vehicle.

## Patentansprüche

1. Verfahren zum Prüfen, ob Information zu einem Betriebszustand eines Fahrzeugs, insbesondere eines Schienenfahrzeugs, die auf einer Anzeige angezeigt werden soll, korrekt ist, wobei die Anzeige zum Anzeigen (9) von Bildern, die Pixel aufweisen, ausgestaltet ist, wobei
- die Information in einem vorgegebenen Bereich (23) der Anzeige (9) angezeigt werden soll,
- die Information, die auf der Anzeige (9) angezeigt werden soll, zum Erstellen eines Bilddatensatzes benutzt wird oder benutzt wurde, der die Daten aufweist, die zum Erzeugen eines entsprechenden Bilds auf der Anzeige (9) notwendig sind,
- die Information eine erste Art von Information (31) und eine zweite Art von Information (33) aufweist, die im vorgegebenen Bereich (23) angezeigt werden sollen,
- die erste Art von Information (31) unter Benutzung von Pixeln einer ersten vorgegebenen Farbe angezeigt werden soll und die zweite Art von Information (33) unter Benutzung von Pixeln einer zweiten vorgegebenen Farbe angezeigt werden soll,
- ein erster charakteristischer Wert der Information berechnet wird und ein zweiter charakteristischer Wert der Information berechnet wird,
wobei die erste und zweite Farbe voneinander abweichen und das Verfahren die folgenden Schritte aufweist:
- Modifizieren, vor dem Berechnen des zweiten charakteristischen Werts, des Bilddatensatzes, der dem Bild entspricht, das im vorgegebenen Bereich (23) angezeigt werden soll, durch Ändern der Pixel der ersten vorgegebenen Farbe zu einer dritten vorgegebene Farbe, die von der ersten Farbe abweicht, wodurch die erste Art von Information bezüglich der Berechnung des zweiten charakteristischen Werts eliminiert wird, und optionales Ändern anderer Farben, wodurch ein erster modifizierter Datensatz erhalten wird,
- Modifizieren, vor dem Berechnen des ersten charakteristischen Werts, des Bilddatensatzes, der dem Bild entspricht, das im vorgegebenen Bereich (23) angezeigt werden soll, durch Ändern der Pixel der zweiten vorgegebenen Farbe zu einer vierten vorgegebene Farbe, die von der zweiten Farbe abweicht, wodurch die zweite Art von Information bezüglich der Berechnung des ersten charakteristischen Werts eliminiert wird, und optionales Ändern anderer Farben, wodurch ein zweiter modifizierter Datensatz erhalten wird,
- Berechnen des ersten charakteristischen Werts aus dem zweiten modifizierten Datensatz,
- Berechnen des zweiten charakteristischen Werts aus dem ersten modifizierten Datensatz,
- Auswählen eines ersten Erwartungswerts, der der ersten Art von Information (31), die angezeigt werden soll, entspricht, und Vergleichen des ersten charakteristischen Werts mit dem ersten Erwartungswert,
- Auswählen eines zweiten Erwartungswerts, der der zweiten Art von Information (33), die angezeigt werden soll, entspricht, und Vergleichen des zweiten charakteristischen Werts mit dem zweiten Erwartungswert,
- wenn der Vergleich nicht erfolgreich ist, d.h. ein erheblicher Unterschied zwischen dem jeweiligen Erwartungswert und dem charakteristischen Wert besteht, Durchführen eines vorgegebenen Vorgangs.

2. Verfahren nach dem vorhergehenden Anspruch, wobei eine erste Art von Information (31), eine zweite Art von Information (33) und eine dritte Art von Information (34) im vorgegebenen Bereich (23) angezeigt werden sollen, und wobei
- die dritte Art von Information (34) unter Benutzung von Pixeln einer fünften vorgegebenen Farbe angezeigt werden soll, wobei die erste, zweite und fünfte Farbe voneinander abweichen,
- ein dritter charakteristischer Wert der dritten Art von Information berechnet wird,
- vor dem Berechnen des zweiten charakteristischen Werts ein Bilddatensatz, der dem Bild entspricht, das im vorgegebenen Bereich (23) angezeigt werden soll, durch Ändern der Pixel der ersten vorgegebenen Farbe zur dritten vorgegebenen Farbe und durch Ändern der Pixel der fünften vorgegebenen Farbe zu einer sechsten vorgegebenen Farbe, und optional Ändern anderer Farben, modifiziert wird, wodurch der erste modifizierte Datensatz erhalten wird,
- vor dem Berechnen des ersten charakteristischen Werts der Bilddatensatz, der dem Bild entspricht, das im vorgegebenen Bereich (23) angezeigt werden soll, durch Ändern der Pixel der zweiten vorgegebenen Farbe zur vierten vorgegebenen Farbe und durch Ändern der Pixel der fünften vorgegebenen Farbe zu einer siebten vorgegebenen Farbe, und optional Ändern anderer Farben, modifiziert wird, wodurch der zweite modifizierte Datensatz erhalten wird,
- vor dem Berechnen des dritten charakteristischen Werts ein Bilddatensatz, der dem Bild entspricht, das im vorgegebenen Bereich (23) angezeigt werden soll, durch Ändern der Pixel der ersten vorgegebenen Farbe zu einer achten vorgegebenen Farbe und durch Ändern der Pixel der zweiten vorgegebenen Farbe zu einer neunten vorgegebenen Farbe, und optional Ändern anderer Farben, modifiziert wird, wodurch ein dritter modifizierter Datensatz erhalten wird,
- der erste charakteristische Wert aus dem zweiten modifizierten Datensatz berechnet wird,
- der zweite charakteristische Wert aus dem ersten modifizierten Datensatz berechnet wird,
- der dritte charakteristische Wert aus dem dritten modifizierten Datensatz berechnet wird,
- der erste charakteristische Wert mit einem ersten Erwartungswert verglichen wird,
- der zweite charakteristische Wert mit einem zweiten Erwartungswert verglichen wird,
- der dritte charakteristische Wert mit einem dritten Erwartungswert verglichen wird.

3. Verfahren nach einem der vorhergehenden Ansprüche, wobei, wenn eine Farbe einer Art von Information, die angezeigt werden soll, geändert wird, um einen entsprechenden modifizierten Datensatz zu erhalten, die Farbe der Art zu einer Farbe geändert wird, die die Information zum Zweck einer Berechnung eines entsprechenden charakteristischen Werts eliminiert.

4. Verfahren nach einem der vorhergehenden Ansprüche, wobei die Farbe, in die die Farbe der Art der Information geändert wird, eine Hintergrundfarbe der Anzeige (9) ist.

5. Anordnung zum Prüfen, ob Information zu einem Betriebszustand eines Fahrzeugs, insbesondere eines Schienenfahrzeugs, die angezeigt werden soll, korrekt ist, die Anordnung aufweisend
- eine Anzeige (9), die Bilder anzeigt, welche Pixel enthalten,
- wobei die Anzeige (9) einen vorgegebenen Bereich (23) aufweist, in dem die Information angezeigt werden soll,
- eine Rechenvorrichtung, die einen charakteristischen Wert der Information, die angezeigt werden soll, berechnet,
- eine Vergleichsvorrichtung, die den charakteristischen Wert mit einem Erwartungswert vergleicht,
wobei die Anordnung dazu ausgestaltet ist, eine erste Art der Information und eine zweite Art der Information im vorgegebenen Bereich (23) anzuzeigen,
wobei die erste Art von Information (31) unter Benutzung von Pixeln einer ersten vorgegebenen Farbe angezeigt werden soll und die zweite Art von Information (33) unter Benutzung von Pixeln einer zweiten vorgegebenen Farbe angezeigt werden soll,
wobei die Rechenvorrichtung einen ersten charakteristischen Wert der ersten Art von Information berechnet und einen zweiten charakteristischen Wert der zweiten Art von Information berechnet, wobei
- die erste und zweite Farbe voneinander abweichen,
- die Anordnung eine Modifikationsvorrichtung aufweist, die, bevor der zweite charakteristische Wert berechnet wird, einen Bilddatensatz, der dem Bild entspricht, das im vorgegebenen Bereich (23) angezeigt werden soll, durch Ändern der Pixel der ersten vorgegebenen Farbe zu einer dritten vorgegebene Farbe, die von der ersten Farbe abweicht, wodurch die erste Art von Information bezüglich der Berechnung des zweiten charakteristischen Werts eliminiert wird, und optionales Ändern anderer Farben, modifiziert, wodurch ein erster modifizierter Datensatz erhalten wird,
- die Modifikationsvorrichtung, bevor der erste charakteristische Wert berechnet wird, den Bilddatensatz, der dem Bild entspricht, das im vorgegebenen Bereich (23) angezeigt werden soll, durch Ändern der Pixel der zweiten vorgegebenen Farbe zu einer vierten vorgegebene Farbe, die von der zweiten Farbe abweicht, wodurch die zweite Art von Information bezüglich der Berechnung des ersten charakteristischen Werts eliminiert wird, und optionales Ändern anderer Farben, modifiziert, wodurch ein erster modifizierter Datensatz erhalten wird,
- die Rechenvorrichtung den ersten charakteristischen Wert aus dem zweiten modifizierten Datensatz berechnet,
- die Rechenvorrichtung den zweiten charakteristischen Wert aus dem ersten modifizierten Datensatz berechnet,
- die Vergleichsvorrichtung den ersten charakteristischen Wert mit einem ersten Erwartungswert vergleicht, der ein ausgewählter Wert ist, welcher der ersten Art von Information (31), die angezeigt werden soll, entspricht,
- die Vergleichsvorrichtung den zweiten charakteristischen Wert mit einem zweiten Erwartungswert vergleicht, der ein ausgewählter Wert ist, welcher der zweiten Art von Information (33), die angezeigt werden soll, entspricht,
- die Anordnung einen entsprechenden vorgegebenen Vorgang durchführt, wenn der Vergleich nicht erfolgreich ist, d.h. ein erheblicher Unterschied zwischen dem jeweiligen Erwartungswert und dem charakteristischen Wert besteht.

6. Schienenfahrzeug, aufweisend die Anordnung gemäß dem vorhergehenden Anspruch, wobei die Anzeige (9) der Anordnung in einem Steuerpult für einen Fahrer des Fahrzeugs angeordnet ist.

## Revendications

1. Procédé de vérification si des informations concernant un état de fonctionnement d'un véhicule, en particulier un véhicule de chemin de fer, qui doivent être affichées sur un dispositif d'affichage, sont correctes, dans lequel le dispositif d'affichage est conçu pour afficher (9) des images comprenant des pixels, dans lequel
- les informations doivent être affichées dans une région prédéterminée (23) du dispositif d'affichage (9),
- les informations qui doivent être affichées sur le dispositif d'affichage (9) sont utilisées ou ont été utilisées pour générer un ensemble de données d'image qui comprend les données nécessaires pour produire une image correspondante sur le dispositif d'affichage (9),
- les informations comprennent un premier type d'informations (31) et un deuxième type d'informations (33) qui doivent être affichés dans la région prédéterminée (23),
- le premier type d'informations (31) doit être affiché à l'aide de pixels d'une première couleur prédéterminée et le deuxième type d'informations (33) doit être affiché à l'aide de pixels d'une deuxième couleur prédéterminée,
- une première valeur caractéristique des informations est calculée et une deuxième valeur caractéristique des informations est calculée,
dans lequel la première couleur et la deuxième couleur sont différentes et le procédé comprend les étapes consistant à :
- modifier, avant le calcul de la deuxième valeur caractéristique, l'ensemble de données d'image correspondant à l'image qui doit être affichée dans la région prédéterminée (23) en changeant les pixels de la première couleur prédéterminée en une troisième couleur prédéterminée, qui est différente de la première couleur, ce qui permet d'éliminer le premier type d'informations par rapport au calcul de la deuxième valeur caractéristique, et, facultativement, en changeant d'autres couleurs, ce qui permet d'obtenir un premier ensemble de données modifié,
- modifier, avant le calcul de la première valeur caractéristique, l'ensemble de données d'image correspondant à l'image qui doit être affichée dans la région prédéterminée (23) en changeant les pixels de la deuxième couleur prédéterminée en une quatrième couleur prédéterminée, qui est différente de la deuxième couleur, ce qui permet d'éliminer le deuxième type d'informations par rapport au calcul de la première valeur caractéristique, et, facultativement, en changeant d'autres couleurs, ce qui permet d'obtenir un deuxième ensemble de données modifié,
- calculer la première valeur caractéristique à partir du deuxième ensemble de données modifié,
- calculer la deuxième valeur caractéristique à partir du premier ensemble de données modifié,
- sélectionner une première valeur attendue, qui correspond au premier type d'informations (31) qui doit être affiché, et comparer la première valeur caractéristique avec la première valeur attendue,
- sélectionner une deuxième valeur attendue, qui correspond au deuxième type d'informations (33) qui doit être affiché, et comparer la deuxième valeur caractéristique avec la deuxième valeur attendue,
- si la comparaison n'est pas réussie, à savoir s'il y a une différence significative entre la valeur attendue respective et la valeur caractéristique, prendre des mesures prédéterminées correspondantes.

2. Procédé selon la revendication précédente, dans lequel un premier type des informations (31), un deuxième type des informations (33) et un troisième type des informations (34) doivent être affichés dans la région prédéterminée (23) et dans lequel
- le troisième type d'informations (34) doit être affiché à l'aide de pixels d'une cinquième couleur prédéterminée, dans lequel la première, la deuxième et la cinquième couleur sont différentes,
- une troisième valeur caractéristique du troisième type d'informations est calculée,
- avant le calcul de la deuxième valeur caractéristique, un ensemble de données d'image correspondant à l'image qui doit être affichée dans la région prédéterminée (23) est modifié en changeant les pixels de la première couleur prédéterminée en la troisième couleur prédéterminée et en changeant les pixels de la cinquième couleur prédéterminée en une sixième couleur prédéterminée, et, facultativement, en changeant d'autres couleurs, ce qui permet d'obtenir le premier ensemble de données modifié,
- avant le calcul de la première valeur caractéristique, l'ensemble de données d'image correspondant à l'image qui doit être affichée dans la région prédéterminée (23) est modifié en changeant les pixels de la deuxième couleur prédéterminée en la quatrième couleur prédéterminée et en changeant les pixels de la cinquième couleur prédéterminée en une septième couleur prédéterminée, et, facultativement, en changeant d'autres couleurs, ce qui permet d'obtenir le deuxième ensemble de données modifié,
- avant le calcul de la troisième valeur caractéristique, un ensemble de données d'image correspondant à l'image qui doit être affichée dans la région prédéterminée (23) est modifié en changeant les pixels de la première couleur prédéterminée en une huitième couleur prédéterminée et en changeant les pixels de la deuxième couleur prédéterminée en une neuvième couleur prédéterminée, et, facultativement, en changeant d'autres couleurs, ce qui permet d'obtenir un troisième ensemble de données modifié,
- la première valeur caractéristique est calculée à partir du deuxième ensemble de données modifié,
- la deuxième valeur caractéristique est calculée à partir du premier ensemble de données modifié,
- la troisième valeur caractéristique est calculée à partir du troisième ensemble de données modifié,
- la première valeur caractéristique est comparée avec une première valeur attendue,
- la deuxième valeur caractéristique est comparée avec une deuxième valeur attendue,
- la troisième valeur caractéristique est comparée avec une troisième valeur attendue.

3. Procédé selon l'une quelconque des revendications précédentes, dans lequel, lors du changement d'une couleur d'un type d'informations qui doit être affiché, afin d'obtenir un ensemble de données modifié correspondant, la couleur du type est changée en une couleur qui élimine les informations à des fins de calcul d'une valeur caractéristique correspondante.

4. Procédé selon la revendication précédente, dans lequel la couleur du type d'informations est changée en une couleur d'arrière-plan du dispositif d' affichage ( 9) .

5. Agencement pour vérifier si des informations concernant un état de fonctionnement d'un véhicule, en particulier un véhicule de chemin de fer, qui doivent être affichées, sont correctes, l'agencement comprenant :
- un dispositif d'affichage (9) qui affiche des images comprenant des pixels,
- le dispositif d'affichage (9) comprenant une région prédéterminée (23) dans laquelle les informations doivent être affichées,
- un dispositif de calcul calculant une valeur caractéristique des informations qui doivent être affichées,
- un dispositif de comparaison comparant la valeur caractéristique avec une valeur attendue,
dans lequel l'agencement est conçu pour afficher un premier type d'informations et un deuxième type d'informations dans la région prédéterminée (23), dans lequel le premier type d'informations (31) doit être affiché à l'aide de pixels d'une première couleur prédéterminée et le deuxième type d'informations (33) doit être affiché à l'aide de pixels d'une deuxième couleur prédéterminée,
dans lequel le dispositif de calcul calcule une première valeur caractéristique du premier type d'informations et calcule une deuxième valeur caractéristique du deuxième type d'informations, dans lequel
- la première couleur et la deuxième couleur sont différentes,
- l'agencement comprend un dispositif de modification modifiant, avant que la deuxième valeur caractéristique ne soit calculée, un ensemble de données d'image correspondant à l'image qui doit être affichée dans la région prédéterminée (23) en changeant les pixels de la première couleur prédéterminée en une troisième couleur prédéterminée, qui est différente de la première couleur, ce qui permet d'éliminer le premier type d'informations par rapport au calcul de la deuxième valeur caractéristique, et, facultativement, en changeant d'autres couleurs, ce qui permet d'obtenir un premier ensemble de données modifié,
- le dispositif de modification modifiant, avant que la première valeur caractéristique ne soit calculée, l'ensemble de données d'image correspondant à l'image qui doit être affichée dans la région prédéterminée (23) en changeant les pixels de la deuxième couleur prédéterminée en une quatrième couleur prédéterminée, qui est différente de la deuxième couleur, ce qui permet d'éliminer le deuxième type d'informations par rapport au calcul de la première valeur caractéristique, et, facultativement, en changeant d'autres couleurs, ce qui permet d'obtenir un deuxième ensemble de données modifié,
- le dispositif de calcul calculant la première valeur caractéristique à partir du deuxième ensemble de données modifié,
- le dispositif de calcul calculant la deuxième valeur caractéristique à partir du premier ensemble de données modifié,
- le dispositif de comparaison comparant la première valeur caractéristique avec une première valeur attendue, qui est une valeur sélectionnée qui correspond au premier type d'informations (31) qui doit être affiché,
- le dispositif de comparaison comparant la deuxième valeur caractéristique avec une deuxième valeur attendue, qui est une valeur sélectionnée qui correspond au deuxième type d'informations (33) qui doit être affiché,
- l'agencement prenant des mesures prédéterminées correspondantes si la comparaison n'est pas réussie, à savoir s'il y a une différence significative entre la valeur attendue respective et la valeur caractéristique.

6. Véhicule de chemin de fer, comprenant l'agencement de la revendication précédente, dans lequel le dispositif d'affichage (9) de l'agencement est agencé dans un pupitre de commande d'un conducteur du véhicule.
